# EUROPÄISCHE PATENTSCHRIFT

(11) **EP 0 553 452 B1**
(45) Veröffentlichungstag und Bekanntmachung des Hinweises auf die Patenterteilung: **11.11.1998**
(21) Anmeldenummer: 92120975.5
(22) Anmeldetag: 09.12.1992
(51) Int. Cl.: G01N 27/12

(54) **Sauerstoffsensoren auf der Basis von Cupratmischoxiden**
Oxygen sensors based on cuprate mixed oxides
Capteurs d'oxygène à base d'oxydes mixtes de cuprate

(30) Priorität: 27.01.1992 DE 4202146
(43) Veröffentlichungstag der Anmeldung: 04.08.1993
(73) Patentinhaber: Heraeus Electro-Nite International N.V., 3530 Houthalen (BE)
(72) Erfinder: Härdtl, Karl-Heinz, Prof. Dr., W-6729 Hagenbach (DE)
(74) Vertreter: Kühn, Hans-Christian

(56) Entgegenhaltungen:
- EP-A- 0 380 347
- WO-A-88/05029
- DE-A- 2 334 044
- US-A- 4 001 756
- US-A- 5 071 626
- PATENT ABSTRACTS OF JAPAN vol. 14, no. 72 (P-1004)9. Februar 1990
- DATABASE WPI Week 9225, Derwent Publications Ltd., London, GB; AN 92-204536
- RÖMPPS CHEMIELEXICON, 4 AUFLAGE,1958, SEITEN 4215-4216

## Beschreibung

Die vorliegende Erfindung betrifft Sauerstoffsensoren auf der Basis von Cupratmischoxide, insbesondere einen Sauerstoffsensor, der n- und p-halbleitende Sensormaterialien enthält, Verfahren zur Herstellung des Sensors sowie dessen Verwendung.

Gasdetektoren, die Sensormaterialien der allgemeinen Formel

A₂₋ₓA'ₓBO₄

enthalten, sind bekannt (DE-23 34 044 C3). Sie werden nicht zum Nachweis von Sauerstoff, sondern zum Nachweis von oxidierbaren Gasen verwendet. Die unter die obige Formel fallenden Cuprate werden aber in der genannten Druckschrift nur am Rande in undotierter Form verwendet, ihre Fähigkeit zum Nachweis oxidierbarer Gase ist nicht besonders ausgeprägt.

In der Patentschrift US 4 001 756 wird ein Sauerstoffsensor mit n- und p-halbleitenden Sensormaterialien beschrieben, wobei die Sensormaterialien in einer Brückenschaltung verschaltet sind.

Es wurde gefunden, daß Cuprate von seltenen Erden oder Alkalimetallen ein ausgezeichnetes weitgehend temperaturkonstantes Nachweisverhalten für Sauerstoff aufweisen, insbesondere in dotierter Form, wenn sie mit Erdalkalimetallen oder seltenen Erden mit Ordnungszahlen von 57 bis 71 dotiert werden. Demzufolge liegt der vorliegenden Erfindung die Aufgabe zugrunde, Sensoren für den Nachweis von Sauerstoff auf der Basis von Cupratmischoxiden zu schaffen, die insbesondere für den Einsatz in Abgasanlagen, beispielsweise von Kraftfahrzeugen, geeignet sind.

Gelöst wird diese Aufgabe durch einen Sauerstoffsensor gemäß dem Kennzeichen des Patentanspruchs 1. Die Unteransprüche geben bevorzugte Ausgestaltungen der Erfindung wieder.

Der erfindungsgemäße Sensor ist dadurch gekennzeichnet, daß er ein p-halbleitendes Metalloxid der allgemeinen Formel

La_{2-x₁}-Sr_{x₁}CuO₄

worin
- x₁: im Bereich von 0,001 bis 0,02 liegt, und
ein n-halbleitendes Metalloxid der allgemeinen Formel

Nd_{2-x₂}Ce_{x₂}CuO₄

worin
- x₂: im Bereich von 0,001 bis 0,05 liegt,
enthält.

Die erfindungsgemäßen Cupratmischoxide bzw. Sauerstoffsensoren lassen sich folgendermaßen herstellen:

Die entsprechenden Metalloxide oder Carbonate aus der Gruppe der seltenen Erden bzw. der Erdalkalimetalle werden in stöchiometrischem Verhältnis fein vermischt, beispielsweise durch Vermahlen in einer geeigneten Mühle, beispielsweise unter Zugabe eines organischen Lösungsmittels, wie Cyclohexan. Das Mahlgut wird dann sedimentieren gelassen, das Lösungsmittel abdekantiert und das Mahlgut getrocknet. Das Pulver wird anschließend kalziniert, wobei der Kalzinierungsvorgang zur besseren Durchmischung durch eine weitere Vermahlung unterbrochen werden kann. Nach der Kalzinierung wird dann erneut vermahlen, wodurch ein feines Cupratpulver erhalten wird.

Das Pulver wird unter Zusatz von Pastengrundstoff und/oder Lösungsmitteln zu einer Paste verarbeitet, und die Paste mit einer Dickschichttechnik, beispielsweise durch Siebdruck, auf ein nicht-leitendes Metalloxidsubstrat, beispielsweise Al₂O₃, aufgebracht. Die so hergestellte Schicht wird getrocknet und gebrannt, beispielsweise durch Trocknen bei Temperaturen oberhalb von 100^{o}C und anschließend bei steigenden Temperaturen, gegebenenfalls auch mit einem Temperaturprofil, bei dem sich steigende Temperaturen und gleichbleibende Temperaturen abwechseln, eingebrannt. Die Einbrenntemperaturen können dabei bis auf etwa 1000^{o}C steigen.

Auf diese Weise erhält man ein mit den Sensormaterialien beschichtetes Metalloxidsubstrat, das nach Anbringen der üblichen Zu- und Ableitungen direkt als Sensor verwendet werden kann.

Die erfindungsgemäßen Sauerstoffsensoren zeichnen sich durch geringe Temperaturabhängigkeit und eine hohe Sauerstoff-Empfindlichkeit bei Temperaturen vorzugsweise oberhalb von 500°C aus. Sie haben eine schnelle Einstellkinetik. Der Meßeffekt beruht nicht auf der Änderung eines Grenz- oder Oberflächenwiderstandes, sondern auf der Änderung des Volumenwiderstandes.

Es ist eine Anordnung in Brückenschaltung mit je einem Sauerstoffsensor mit p- und n-leitenden Sensormaterialien vorgesehen, wobei diese an demselben Eingang für die Eingangsspannung in verschiedenen Brückenzweigen der Brückenschaltung liegen und die Meßspannung in der Brückendiagonale abgenommen wird. Die restlichen Schaltelemente der Brücke sind Ohm'sche Widerstände. Diese Anordnung ist insbesondere für die Verschaltung von solchen Sauerstoffsensoren geeignet, die unterschiedliche Temperaturempfindlichkeit des p- und des n-halbleitenden Sensormaterials aufweisen.

Eine weitere Möglichkeit besteht darin, in jedem Brückenzweig zwei Sauerstoffsensoren mit n- und p-halbleitenden Sensormaterial dergestalt einzusetzen, daß sich in einem Brückenzweig der Sauerstoffsensor aus n-leitenden Sensormaterial im anderen Brückenzweig der Sauerstoffsensor aus p-leitendem Sensormaterial, und umgekehrt, gegenüberliegen.

Zweckmäßige Ausgestaltungen und Weiterbildungen der Erfindung sind in den restlichen Unteransprüchen gekennzeichnet.

Ein Ausführungsbeispiel der Erfindung wird nachfolgend unter Bezugnahme auf die Zeichnung näher erläutert. In dieser zeigt:
- Figur 1: eine erste elektrische Anordnung der Sauerstoffsensoren;
- Figur 2: eine zweite mögliche Anordnung der Sauerstoffsensoren, jeweils in Brückenschaltung;
- Figur 3: die Abhängigkeit der spezifischen elektrischen Leitfähigkeit vom Sauerstoffpartialdruck im Temperaturbereich zwischen 730°C und 930°C für 0,15 (nicht erfindungsgemäß) strontiumdotiertes Lanthancuprat; und
- Figur 4: die gleiche Abhängigkeit bei einem Lanthancuprat, dessen Strontiumanteil bei 0,001 liegt.

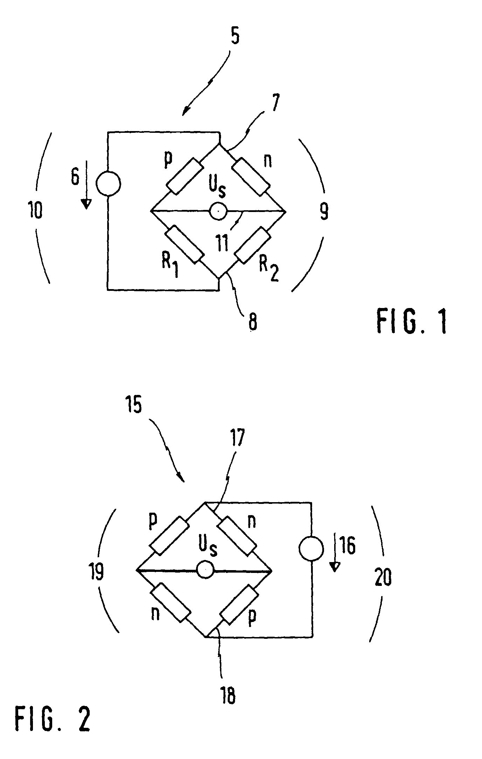

In Fig. 1 ist eine insgesamt mit 5 bezeichnete Brückenschaltung 6 mit einer Eingangsstromquelle 6 vorgesehen, die an die beiden Eingänge 7, 8 der Brücke gelegt sind. In dem einen Brückenzweig 9, der zwischen den Eingängen 7, 8 der Brückenschaltung 5 verläuft, ist die Serienschaltung eines Sauerstoffsensors aus n-leitendem Sensormaterial mit einem Ohm'schen Widerstand vorgegebenen Wertes R₂ und in dem anderen Brückenzweig die Serienschaltung eines Ohm'schen Widerstandes R₁ mit einem Sauerstoffsensor aus p-leitendem Sensormaterial vorgesehen, und zwar dergestalt, daß sich einerseits die Widerstände R₁ und R₂ in den beiden verschiedenen Zweigen gegenüberliegen, ebenso wie die Sauerstoffsensoren mit p- und n-halbleitendem Sensormaterial. In der Brückendiagonale 11 kann die Meßspannung Uₛ abgenommen werden.

In der alternativen Ausführungsform gemäß Fig. 2 werden in der Brückenschaltung 15 die Eingangsspannung 16 zwischen den Eingängen 17 und 18 der Brückenschaltung 15 angelegt. In jedem der beiden Zweige 19, 20 ist die Serienschaltung zweier Sauerstoffsensoren mit einmal einem n-halbleitenden und einmal mit einem p-halbleitendem Sensormaterial angeordnet, und zwar dergestalt, daß jedem Sauerstoffsensor aus n-leitendem Sensormaterial in dem einen Brückenzweig ein solcher mit p-leitendem Sensormaterial im anderen Zweig, und umgekehrt, gegenüberliegt. Diese Ausgestaltung hat bei gleicher Temperaturempfindlichkeit des p- und n-leitenden Sensormaterials den Vorteil, daß sich die höchste Sauerstoffempfindlichkeit bei praktisch nicht vorhandener Temperaturabhängigkeit ergibt.

Weitere Beispiele werden nachfolgend beschrieben.

### Beispiel 1

### Herstellung eines Cupratpulvers der Formel La₂₋ₓSrₓCuO₄

Ein Metalloxid der Formel La₂O₃, ein Metalloxid der Formel SrO und ein Metalloxid der Formel CuO werden in stöchiometrischem Verhältnis 1,98:0,02:1 unter Zugabe von Cyclohexan in einem Mahlbecher vermischt und 1 h lang in einer Planetenkugelmühle vermahlen. Das Mahlgut wird ca. 30 min sedimentieren gelassen und das Lösungsmittel abdekantiert. Restliches noch im Mahlgut vorhandenes Lösungsmittel wird in einem Trockenofen bei ca. 90°C abgedampft.

Das erhaltene Pulver wird in einem Kalzinierofen 8 h bei 90°C kalziniert, anschließend 15 min in einer Planetenmühle vermischt und ver- mahlen und noch einmal 8 h lang bei 910°C kalziniert. Nach dem erneuten Vermahlen über einen Zeitraum von ca. 15 min erhält man ein feines Cupratpulver der obigen Formel mit dem Dotierungsgrad 0,02.

Anhand des Röntgendiffraktogramms wir der vollständige Einbau der Dotierung bestätigt.

### Herstellung von Sensormaterialschichten

Das nach dem obigen Beispiel erhaltene Cupratpulver wird mit Verdünner zu einer Paste verarbeitet und die Paste mittels Siebdruck auf ein Aluminiumsubstrat aufgebracht. Das beschichtete Substrat wird 15 min bei 120°C getrocknet und anschließend mit folgendem Temperaturprofil unter einem Sauerstoffstrom eingebrannt:
Steigerung 20°/min auf 350°C
10 min Temperaturkonstanz bei 350°C
Steigerung 20°/min auf 940°C
15 min Temperaturkonstanz bei 940°C
Abkühlen um 20^{o}/min auf 20^{o}C

Nach dieser Methode läßt sich sowohl ein Sauerstoffsensor mit einem einzigen Sensormaterial als auch ein Sensor mit mehreren Sensormaterialien herstellen.

### Beispiel 2

### Herstellung eines Cupratpulvers der Formel La₂₋ₓSrₓCuO₄

Ein Metalloxid der Formel La₂O₃, ein Metallcarbonat der Formel SrCO₃ und ein Metalloxid der Formel CuO werden in stöchiometrischem Verhältnis 1,98:0,02:1 unter Zugabe von Cylcohexan in einem Mahlbecher vermischt und 1 h lang in einer Planetenkugelmühle vermahlen. Das Mahlgut wir ca. 30 min sedimentieren gelassen und das Lösungsmittel abdekantiert. Restliches noch im Mahlgut vorhandenes Lösungsmittel wird in einem Trockenofen bei ca. 90°C abgedampft.

Das erhaltene Pulver wird in einem Kalzinierofen 8 h bei 900°C kalziniert, anschließend 15 min in einer Planetenmühle vermischt und vermahlen und noch einmal 8 h lang bei 910°C kalziniert. Nach dem erneuten Vermahlen über einen Zeitraum von ca. 15 min erhält man ein feines Cupratpulver der obigen Formel mit dem Dotierungsgrad 0,02.

Anhand des Röntgendiffraktorgramms wird der vollständige Einbau der Dotierung bestätigt.

Die Herstellung von Sensormaterialschichten erfolgte wie im Beispiel 1.

### Beispiel 3

### Herstellung eines Cupratpulvers der Formel Nd₂₋ₓCeₓCuO₄

Ein Metalloxid der Formel Nd₂O₃, ein Metalloxid der Formel CeO₂ und ein Metalloxid der Formel CuO werden in stöchiometrischem Verhältnis 1,98:0,02:1 unter Zugabe von Cylcohexan in einem Mahlbecher vermischt und 1h lang in einer Planetenkugelmühle vermahlen. Das Mahlgut wird ca. 30 min sedimentieren gelassen und das Lösungsmittel abdekantiert. Restliches, noch im Mahlgut vorhandenes Lösungsmittel wird in einem Trockenofen bei ca. 90°C abgedampft.

Das erhaltene Pulver wird in einem Kalzinierofen 8h bei 900°C kalzinert, anschließend 15 min in einer Planetenmühle vermischt und vermahlen und noch einmal 8h lang bei 910°C kalziniert. Nach dem erneuten Vermahlen über einen Zeitraum von ca. 15 min erhält man ein feines Cupratpulver der obigen Formel mit dem Dotierungsgrad 0,02.

Anhand des Röntgendiffraktorgramms wird der vollständige Einbau der Dotierung bestätigt.

Die Herstellung von Sensormaterialschichten erfolgte wie im Beispiel 1.

### Beispiel 4

Herstellung von kombinierten Sensorschichten mit Materialien nach den Beispielen 1, 2 und 3 für Sensoren mit p- und n-leitenden Sensorschichten.

Zuerst werden dabei die n-leitenden Strukturen mit Nd₂₋ₓCeₓCuO₄-Paste gedruckt und unter Stickstoffatmosphäre bei 980°C gesintert und dann anschließend die p-leitenden Strukturen mit La₂₋ₓSrₓCuO₄-Paste auf das gleiche Substrat gedruckt und diese bei 940°C unter Sauerstoffstrom gebrannt.

### Beispiel 5

Analog Beispiel 1 wurden folgende Verbindungen dargestellt:

La_{1,85}Sr_{0,15}CuO₄ (nicht erfindungsgemäß)

La_{1,999}Sr_{0,001}CuO₄

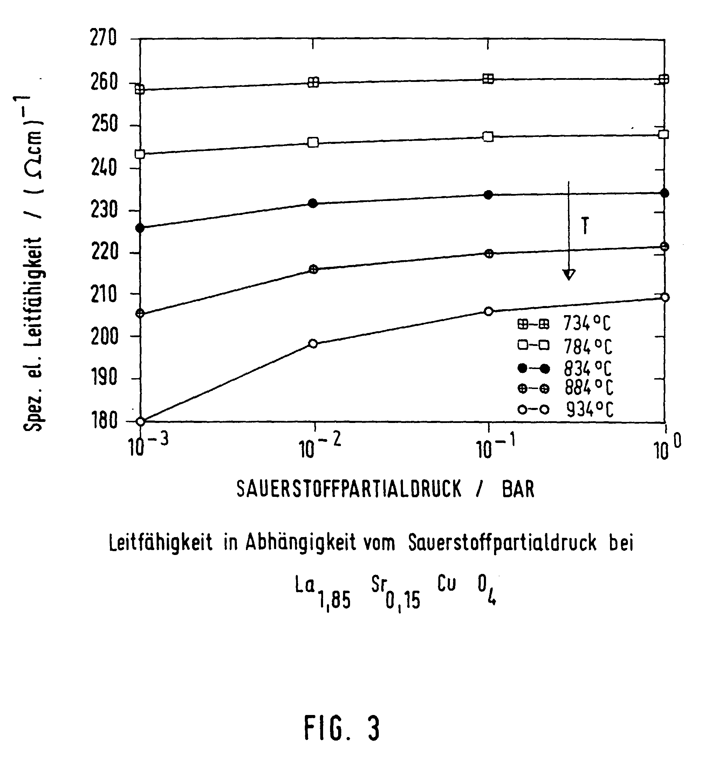

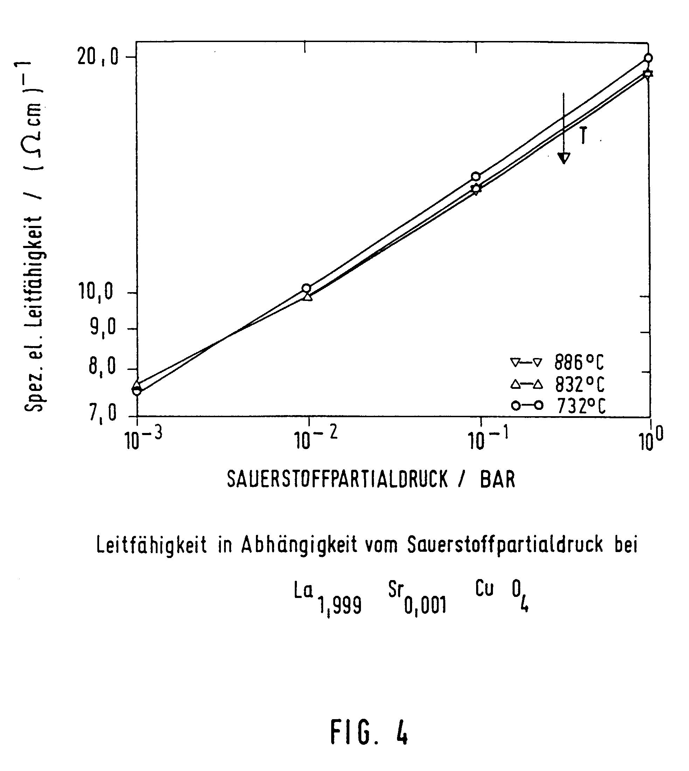

Das Verhalten dieser Verbindungen in Abhängigkeit von Temperatur und Sauerstoffgehalt wurde untersucht. Die Ergebnisse sind in den Figuren 3 und 4 dargestellt.

Figur 3 zeigt die Abhängigkeit der spezifischen elektrischen Leitfähigkeit vom Sauerstoffpartialdruck im Temperaturbereich zwischen 730°C und 930°C für 0,15 strontiumdotiertes Lantancuprat.

Figur 4 zeigt die gleiche Abhängigkeit bei einem Cuprat, dessen Strontiumanteil bei 0,001 liegt.

Aus den Figuren ist ersichtlich, daß ein Sauerstoffsensor mit hoher Empfindlichkeit nur erreicht wird, wenn man den Dotierungsgrad relativ niedrig wählt. Eine geringfügige Dotierung ist jedoch notwendig.

### Beispiel 6

### Herstellung eines Cupratpulvers der Formel La₂₋ₓSrₓCuO₄

Ein Metalloxid der Formel La₂O₃, ein Metalloxid der Formel SrO und ein Metalloxid der Formel CuO werden in stöchiometrischem Verhältnis La:Sr:Cu von 1,999:0,001:1 unter Zugabe von Cyclohexan in einem Mahlbecher vermischt und 1 h lang in einer Planetenkugelmühle vermahlen. Das Mahlgut wird ca. 30 min sedimentieren gelassen und das Lösungsmittel abdekantiert. Restliches noch im Mahlgut vorhandenes Lösungsmittel wird in einem Trockenofen bei ca. 90°C abgedampft.

Das erhaltene Pulver wird in einem Kalzinierofen 8 h bei 910°C kalziniert, anschließend 15 min in einer Planetenmühle vermischt und vermahlen und noch einmal 8 h lang bei 910°C kalziniert. Nach dem erneuten Vermahlen über einen Zeitraum von ca. 15 min erhält man ein feines Cupratpulver der obigen Formel mit dem Dotierungsgrad 0,001.

Anhand des Röntgendiffraktogramms wir der vollständige Einbau der Dotierung bestätigt.

### Herstellung von Sensormaterialschichten

Das nach dem obigen Beispiel erhaltene Cupratpulver wird mit Verdünner zu einer Paste verarbeitet und die Paste mittels Siebdruck auf ein Aluminiumsubstrat aufgebracht. Das beschichtete Substrat wird 15 min bei 120°C getrocknet und anschließend mit folgendem Temperaturprofil unter einem Sauerstoffstrom eingebrannt:
Steigerung 20°/min auf 350°C
10 min Temperaturkonstanz bei 350°C
Steigerung 20°/min auf 940°C
15 min Temperaturkonstanz bei 940°C
Abkühlen um 20°/min auf 20°C

### Beispiel 7

### Herstellung eines Cupratpulvers der Formel La₂₋ₓ-SrₓCuO₄

Ein Metalloxid der Formel La₂O₃, ein Metallcarbonat der Formel SrCO₃ und ein Metalloxid der Formel CuO werden in stöchiometrischem Verhältnis La:Sr:Cu von 1,999:0,001:1 unter Zugabe von Cylcohexan in einem Mahlbecher vermischt und 1 h lang in einer Planetenkugelmühle vermahlen. Das Mahlgut wir ca. 30 min sedimentieren gelassen und das Lösungsmittel abdekantiert. Restliches noch im Mahlgut vorhandenes Lösungsmittel wird in einem Trockenofen bei ca. 90°C abgedampft.

Das erhaltene Pulver wird in einem Kalzinierofen 8 h bei 950^{o}C kalziniert, anschließend 15 min in einer Planetenmühle vermischt und vermahlen und noch einmal 8 h lang bei 950°C kalziniert. Nach dem erneuten Vermahlen über einen Zeitraum von ca. 15 min erhält man ein feines Cupratpulver der obigen Formel mit dem Dotierungsgrad 0,001.

Anhand des Röntgendiffraktorgramms wird der vollständige Einbau der Dotierung bestätigt.

Die Herstellung von Sensormaterialschichten erfolgte wie im Beispiel 6.

### Beispiel 8

### Herstellung eines Cupratpulvers der Formel Nd₂₋ₓCeₓCuO₄

Ein Metalloxid der Formel Nd₂O₃, ein Metalloxid der Formel CeO₂ und ein Metalloxid der Formel CuO werden in stöchiometrischem Verhältnis Nd:Ce:Cu von 1,98:0,02:1 unter Zugabe von Cylcohexan in einem Mahlbecher vermischt und 1h lang in einer Planetenkugelmühle vermahlen. Das Mahlgut wird ca. 30 min sedimentieren gelassen und das Lösungsmittel abdekantiert. Restliches, noch im Mahlgut vorhandenes Lösungsmittel wird in einem Trockenofen bei ca. 90°C abgedampft.

Das erhaltene Pulver wird in einem Kalzinierofen 8h bei 950°C kalzinert, anschließend 15 min in einer Planetenmühle vermischt und vermahlen und noch einmal 8h lang bei 910°C kalziniert. Nach dem erneuten Vermahlen über einen Zeitraum von ca. 15 min erhält man ein feines Cupratpulver der obigen Formel mit dem Dotierungsgrad 0,02.

Anhand des Röntgendiffraktorgramms wird der vollständige Einbau der Dotierung bestätigt.

Die Herstellung von Sensormaterialschichten erfolgte wie im Beispiel 6, jedoch liegt die Maximaltemperatur bei 980^{o}C und es wird unter Stickstoffstrom gebrannt.

## Patentansprüche

1. Sauerstoffsensor auf der Basis komplexer Metalloxide, der ein p-halbleitendes Metalloxid und ein n-halbleitendes Metalloxid in der Form einer Brückenschaltung enthält,
**dadurch gekennzeichnet**, daß
das p-halbleitende Metalloxid die allgemeine Formel
La_{2-xSub 1}Sr_{xSub 1}CuO₄
worin
x₁ im Bereich von 0,001 bis 0,02 liegt, und
das n-halbleitende Metalloxid die allgemeine Formel
Nd_{2-xSub 2}Ce_{xSub 2}CuO₄
worin
x₂ im Bereich von 0,001 bis 0,05 liegt,
aufweist.

2. Sauerstoffsensor nach Anspruch 1, dadurch gekennzeichnet, daß die p- und n-leitenden Sensormaterialien dieser Sensoren an demselben Eingang für die Eingangsspannung in verschiedenen Brückenzweigen der Brückenschaltung liegen.

3. Sauerstoffsensor nach Anspruch 2, gekennzeichnet durch eine Anordnung in Brückenschaltung je eines Sauerstoffsensors mit p- und n-leitenden Sensormaterialien, wobei in dem einen Brückenzweig die Serienschaltung zweier Sauerstoffsensoren aus einem p- und einem n-leitenden Sensormaterial und in dem anderen Brückenzweig die Serienschaltung zweier Sauerstoffsensoren aus einem n- und p-leitenden Sensormaterial so vorgesehen ist, daß dem Sauerstoffsensor mit n-leitendem Sensormaterial in dem einen Brückenzweig ein Sauerstoffsensor mit p-leitendem Sensormaterial in dem anderen Brückenzweig gegenüberliegt.

4. Verwendung von Sauerstoffsensoren nach Ansprüchen 1-3 in Abgasanlagen, insbesondere von Kraftfahrzeugen.

5. Verfahren zur Herstellung eines Sauerstoffsensors nach den Ansprüchen 1 bis 2, dadurch gekennzeichnet, daß die Oxide bzw. Carbonate der Metalle La, Sr, Cu bzw. Nd, Ce, Cu in stöchiometrischem Verhältnis entsprechend der Formel:
La_{2-x₁}Sr_{x₁}CuO₄ ; 0,001 ≤ x₁ ≤ 0,02
bzw. der Formel
Nd_{2-x₂}Ce_{x₂}CuO₄ ; 0,001 ≤ x₂ ≤ 0,05
fein vermischt, in einem organischen Lösungsmittel sedimentiert, getrocknet und kalziniert und vermahlen werden und die so erhaltenen Cupratpulver in Form von Pasten vermittels einer Dickschichttechnik auf ein nicht-leitendes Metalloxidsubstrat aufgebracht und eingebrannt werden.

6. Verfahren nach Anspruch 5, dadurch gekennzeichnet, daß die Kalzinierung der Cupratpulver in zwei Kalziniervorgängen bei Temperaturen von 800 bis 1000°C mit zwischengeschalteter Vermahlungsstufe durchgeführt wird.

7. Verfahren nach Anspruch 5, dadurch gekennzeichnet, daß das Einbrennen der Dickschichten bei steigenden Temperaturen bis ca. 1.000°C durchgeführt wird.

## Claims

1. Oxygen sensor based on complex metal oxides, which contains a p-semiconducting metal oxide and an n-semiconducting metal oxide in the form of a bridge circuit, characterized in that the p-semiconducting metal oxide has the general formula
*La*₂₋_{*x*}_{₁}*Sr*_{*x*}_{₁}*CuO*_{*4*}
in which
x₁ is in the range from 0.001 to 0.02, and the n-semiconducting metal oxide has the general formula
*Nd*₂₋_{*x*}_{₂}*Ce*_{*x*}_{₂}*CuO*₄
in which
x₂ is in the range from 0.001 to 0.05.

2. Oxygen sensor according to Claim 1, characterized in that the p- and n-conducting sensor materials of these sensors are in different bridge arms of the bridge circuit at the same input for the input voltage.

3. Oxygen sensor according to Claim 2, characterized by an arrangement in the bridge circuit of one oxygen sensor each with p- and n-conducting sensor materials, the series connection of two oxygen sensors of a p- and an n-conducting sensor material being provided in one bridge arm, and the series connection of two oxygen sensors of an n- and p-conducting sensor material in the other bridge arm, so that the oxygen sensor with n-conducting sensor material in one bridge arm is opposite an oxygen sensor with p-conducting sensor material in the other bridge arm.

4. Use of oxygen sensors according to Claims 1-3 in exhaust gas systems, in particular of motor vehicles.

5. Process for the production of an oxygen sensor according to Claims 1 and 2, characterized in that the oxides of the metals La, Sr and Cu or carbonates of the metals Nd, Ce and Cu are finely mixed in a stoichiometric ratio corresponding to the formula:
*La*₂₋_{*x*}_{₁}*Sr*_{*x*}_{₁}*CuO*₄ ; 0.001≤*x*₁≤0.02
or the formula
*Nd*₂₋_{*x*}_{₂}*Ce*_{*x*}_{₂}*CuO*₄*;* 0.001≤*x*₂≤0.05,
settled out in an organic solvent, dried and calcined and milled, and the cuprate powders thus obtained are applied in the form of pastes to a non-conducting metal oxide substrate by means of a thick-film technique and are fired.

6. Process according to Claim 5, characterized in that the calcining of the cuprate powders is carried out in two calcining operations at temperatures of 800 to 1000°C with an intermediate milling stage.

7. Process according to Claim 5, characterized in that the firing of the thick films is carried out at increasing temperatures up to about 1000°C.

## Revendications

1. Capteur d'oxygène à base d'oxydes métalliques complexes, qui contient un oxyde métallique semiconducteur p et un oxyde métallique semiconducteur n sous la forme d'un circuit en pont, caractérisé en ce que l'oxyde métallique semiconducteur p présente la formule générale
*La*₂₋_{*x*}_{₁}*Sr*_{*x*}_{₁}*CuO*₄
où x₁ est compris entre 0,001 et 0,02 et l'oxyde métallique semiconducteur n présentant la formule générale
*Nd*₂₋_{*x*}_{₂}*Ce*_{*x*}_{₂}*CuO*₄
où x₂ est compris entre 0,001 et 0,05.

2. Capteur d'oxygène selon la revendication 1, caractérisé en ce que les matériaux de détection de conduction p et n de ces capteurs se trouvent à la même entrée pour la tension d'entrée dans différentes branches du pont du circuit.

3. Capteur d'oxygène selon la revendication 2, caractérisé par un montage en pont chacun d'un détecteur d'oxygène avec des matériaux de détection de conduction p et n, dans une branche du pont étant prévu le montage en série de deux capteurs d'oxygène en un matériau de détection à conduction p et un matériau de détection à conduction n et dans l'autre branche du pont le montage en série de deux capteurs d'oxygène en un matériau de détection de conduction n et de conduction p, de sorte qu'en vis-à-vis du capteur d'oxygène avec un matériau de détection de conduction n dans une branche du pont se trouve un capteur d'oxygène avec un matériau de détection de conduction p dans l'autre branche du pont.

4. Utilisation de capteurs d'oxygène selon les revendications 1 à 3 dans des installations de gaz d'échappement, en particulier de véhicules automobiles.

5. Procédé de fabrication d'un capteur d'oxygène selon les revendications 1 et 2, caractérisé en ce que les oxydes ou les carbonates des métaux La, Sr, Cu ou Nd, Ce, Cu sont finement mélangés dans le rapport stoéchiométrique selon la formule
*La*₂₋_{*x*}_{₁}*Sr*_{*x*}_{₁}*CuO*₄; 0,001 ≤ x₁ ≤ 0,02
ou selon la formule
*Nd*₂₋_{*x*}_{₂}*Ce*_{*x*}_{₂}*CuO*₄*;* 0,001 ≤ x₂ ≤ 0,05
laissés reposer dans un solvant organique, séchés et calcinés et broyés et la poudre de cuprate ainsi obtenue déposée sous forme de pâte par un procédé de dépôt à couches épaisses sur un substrat d'oxyde métallique non-conducteur et recuits.

6. Procédé selon la revendication 5, caractérisé en ce que la calcination de la poudre de cuprate est effectuée en deux étapes de calcination à des températures de 800 à 1000°C avec interposition d'étapes de broyage.

7. Procédé selon la revendication 5, caractérisé en ce que le recuit des couches épaisses est effectué à des températures croissantes jusqu'à environ 1000°C.
